# EUROPEAN PATENT SPECIFICATION

(11) **EP 3 967 597 B1**
(45) Date of publication and mention of the grant of the patent: **28.10.2026**
(21) Application number: 21198233.5
(22) Date of filing: 28.12.2017
(51) Int. Cl.: B64C 25/12, B64C 25/22, B64C 25/26, B64C 25/18, B64C 25/24

(54) **AIRCRAFT LANDING GEAR ASSEMBLY**
FLUGZEUGFAHRWERKBAUGRUPPE
ENSEMBLE DE TRAIN D'ATTERRISSAGE D'AÉRONEF

(43) Date of publication of application: 16.03.2022
(62) Document number(s) of the earlier application(s) in accordance with Art. 76 EPC: 17210865.6 / 3 505 442
(73) Proprietor: Safran Landing Systems UK Ltd, Gloucester, Gloucestershire GL2 9QH (GB)
(72) Inventor: EVANS, Royston Alan, Gloucester GL2 9QH (GB); SHAW, Paul, Gloucester GL2 9QH (GB)
(74) Representative: Latham, Stuart Alexander

(56) References cited:
- EP-A1- 2 816 237
- EP-A2- 2 003 056
- JP-A- 2009 047 237
- JP-A- 2011 102 604
- US-A1- 2006 208 501
- US-A1- 2013 119 196
- JAYANT SIROHI ET AL: "Development of a compact piezoelectric-hydraulic hybrid actuator", PROCEEDINGS OPTICAL DIAGNOSTICS OF LIVING CELLS II, vol. 4327, 16 August 2001 (2001-08-16), US, pages 401 - 412, XP055448442, ISSN: 0277-786X, ISBN: 978-1-5106-1324-9, DOI: 10.1117/12.436551

## Description

### BACKGROUND OF THE INVENTION

An aircraft assembly can comprise a first part movably mounted with respect to a second part. An actuator can be provided to move the first part.

It is common for an aircraft assembly actuator to be driven by a centralised aircraft hydraulic system that is coupled to a plurality of aircraft assembly actuators mounted on the aircraft.

The present inventors have devised a new type of aircraft assembly actuator that can result in an aircraft assembly of reduced mass, size and/or complexity.

JP2009047237A discloses an actuator system including a plurality of actuators comprising first actuator having a hollow structure and comprises a first piston having a first piston rod sliding in a first cylinder of a first actuator body, a pump for feeding fluid by the rotation of a motor, a controller for controlling the rotation of the motor, a stand pipe which is fitted to an inner circumferential surface of the first piston rod with a reservoir oil chamber being built therein and a second actuator comprising a second piston having a second piston rod sliding in a second cylinder of a second actuator body, and a priority valve for adjusting the fluid to be introduced from the first actuator body into the second actuator body according to the pressure of the fluid.

### SUMMARY OF THE INVENTION

A first aspect of the invention provides an aircraft landing gear assembly according to claim 1.

The use of a piezo-electric pump to drive the actuator can result in an aircraft assembly of reduced mass, size, complexity and/or of reduced maintenance requirement.

The assembly can be arranged such that the second part can be moved relative to the first part with a power input of less than or equal to 500 Watts. Such assemblies can use a wider range of electro-hydraulic actuators and/or a single electro-hydraulic actuator to drive the second part relative to the first part.

The hydraulic fluid supply circuit further comprises an accumulator for storing hydraulic fluid. The hydraulic fluid supply circuit can be arranged with a single accumulator, which is dedicated to the actuator, and a single pump, which is dedicated to the actuator. Such assemblies can provide a simple, self-contained solution, minimising interconnecting hydraulic pathways.

The actuator can be configured as a single acting actuator, driven to either extend or retract for example. Such assemblies can use a wider range of electro-hydraulic actuators and/or a single electro-hydraulic actuator to drive the second part relative to the first part.

The aircraft landing gear assembly further comprises: a main strut arranged to be movably coupled to an aircraft to be movable between a stowed condition for flight and a deployed condition for take-off and landing; a multi linkage side stay coupled between the main strut and a side stay anchor point and having a locking condition in which the side stay reacts attempted movement of the main strut from the deployed position and a passive condition in which the stay permits movement of the main strut to the stowed condition; a multi linkage lock stay coupled between the side stay and a lock stay anchor point and having a locking condition in which it reacts attempted movement of the side stay from the locking condition and a passive condition in which the lock stay permits movement of the main strut to the stowed condition. The second part can comprise a link of the lock stay and the first part can comprise another part of the assembly such as the other link of the lock stay, the stay or one of the stay links, or the main strut for example. The actuator is a lock stay actuator arranged during the first phase to apply an unlocking force to the lock stay to change the lock stay from the locking condition to the unlocking condition. The assembly further comprises a retraction actuator arranged to move the main strut between the deployed and stowed conditions, wherein once the lock stay actuator has attained the second extension state, operation of the retraction actuator biases the lock stay actuator to change during a second phase to a third extension state in which the main strut is in the stowed condition. The present inventors found that such assemblies are particularly suited to a piezo-electric driven actuator due to the first phase having a relatively small stroke, and thus lower actuator flow requirement, in comparison to the second phase.

The actuator further comprises a passive chamber on an opposite side of the piston with respect to the active chamber, the passive chamber containing hydraulic fluid in fluid communication with the accumulator, wherein the hydraulic circuit further comprises a pump bypass check valve arranged in parallel with the pump, the pump bypass check valve being arranged to permit flow of hydraulic fluid from the passive chamber to the active chamber but inhibit the flow of hydraulic fluid from the active chamber be easily be driven by an external force, such as the retraction actuator, during the second phase and/or can dampen a change between extension states during the second phase by fluid passing through the hydraulic supply circuit.

The actuator can be arranged such that the increase in fluid pressure within the active chamber causes the fluid to act directly on the rod piston. Thus, the rod piston can define a moveable surface of the active chamber, with the rod piston being provided with one or more dynamic seals arranged slide in sealing engagement with an inner surface of the cylinder to inhibit fluid flow across the rod piston. This can result in a simple actuator design.

The actuator comprises an actuation piston which is distinct from, and movable relative to, the piston of the piston and rod assembly. The actuation piston can be annular and can receive the piston rod. The actuation piston can include one or more dynamic seals arranged slide in sealing engagement with an inner surface of the cylinder to inhibit fluid flow across the actuator piston. The actuator is arranged such that an increase in fluid pressure in the active chamber causes fluid to act on the actuation piston, which moves into contact with the rod piston to move the rod piston to causes the actuator to change between the first and second extension states. Thus, the actuator piston defines the movable surface of the active chamber. The rod piston is shaped to permit hydraulic fluid within the passive chamber to move through or beyond it. This internal 'lost motion' arrangement can enable a relatively simple hydraulic fluid supply circuit because the piston rod can be driven by an external force without forcing fluid around the hydraulic circuit, or with less fluid being forced around the circuit in comparison to an arrangement where fluid in the passive chamber is inhibited from moving across the rod piston by a dynamic seal.

The hydraulic fluid can comprise oil.

The actuator, pump and reservoir can be formed as single unit, requiring only electronical connections to the wider aircraft environment.

The actuator and hydraulic circuit can comprise no control valves.

The actuator can be directly connected to the pump with no intermediate control functions or elements.

The actuator can have a unidirectional load capability.

An aircraft landing gear assembly can comprise a main strut in the form of a telescopic shock absorbing strut and/or a wheel assembly mounted to a free end of the main strut.

A second aspect of the invention provides an aircraft comprising an aircraft assembly according to the first aspect.

### BRIEF DESCRIPTION OF THE DRAWINGS

Embodiments of the invention will now be described with reference to the accompanying drawings, in which:
Figure 1 is a diagram of an aircraft;
Figures 2a to 2g are diagrams of aircraft landing gear assemblies;
Figure 3 is a diagram of the up-lock actuator and hydraulic supply circuit of the landing gear assembly of Figure 2f not forming part of the claimed invention;
Figure 4 is a diagram of the lock stay actuator and hydraulic supply circuit of the landing gear assembly of Figure 2e;
Figure 5 is a diagram of the actuator of Figure 4; and
Figure 6 is a diagram of an alternative lock stay actuator of the landing gear assembly of Figure 2e.

### DETAILED DESCRIPTION OF EMBODIMENT(S)

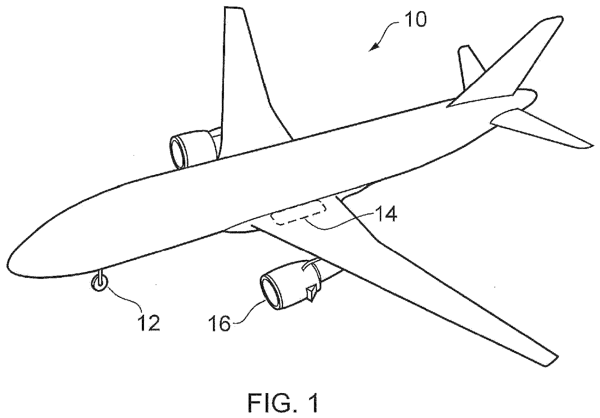

Figure 1 is a diagram of an aircraft 10. The aircraft 10 includes assemblies such as a nose landing gear 12, main landing gear 14 and engines 16. Other aircraft assemblies will be apparent to the skilled person. An aircraft assembly can be a group of interconnected parts which are arranged to be fitted to one or more other aircraft assemblies as a unit. The term aircraft as used herein includes aeroplanes, helicopters, UAVs and the like.

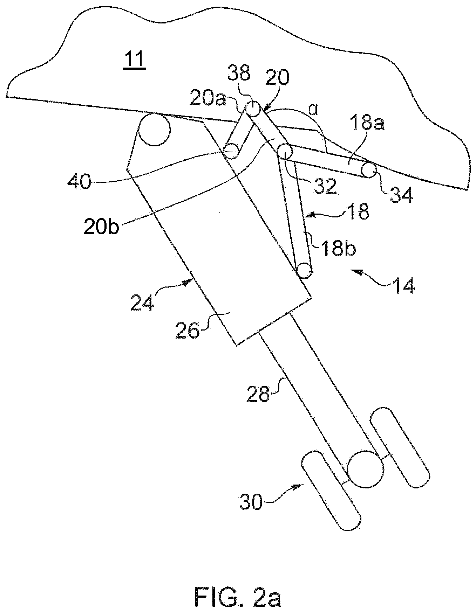

Referring now to Figures 2a to 2e, an aircraft assembly, namely an aircraft landing gear assembly, is shown generally at 14. The landing gear assembly 14 includes a foldable stay 18, a lock stay 20 and a down lock spring assembly 22 mounted to the stay 18 and arranged to urge the lock stay 20 to assume a locked state. The landing gear assembly also includes a main shock absorber strut 24, comprising a main fitting 26 and a sliding tube 28, as well as a wheel and brake assembly 30.

The aircraft landing gear assembly is movable between a deployed condition, for take-off and landing, and a stowed condition for flight. An actuator (not shown) is provided for moving the landing gear between the deployed condition and the stowed condition. This actuator is known in the art as a retraction actuator, and more than one can be provided. A retraction actuator can have one end coupled to the airframe and another end coupled to the main strut such that extension and retraction of the actuator results in movement of the main strut between deployed and stowed conditions.

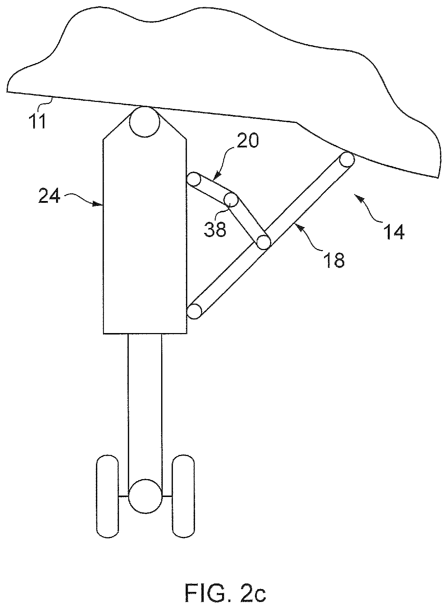

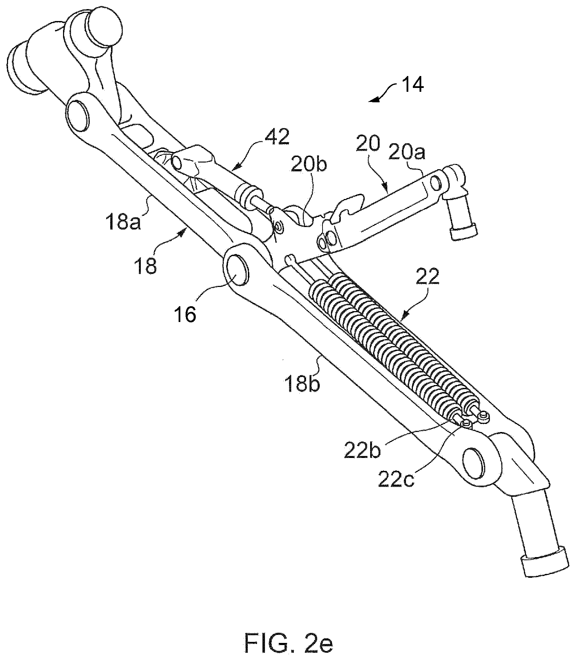

The stay 18 serves to support the orientation of the main fitting 26 when the landing gear is in the deployed condition. The stay 18 generally includes a two bar linkage that can be unfolded to assume a generally straight or aligned, over centre condition in which the stay 18 is locked to inhibit movement of the main fitting, as shown in Figures 2c and e. When the stay is broken, it no longer prevents pivotal movement of the main fitting 26 and the main fitting 26 can be moved by the retraction actuator towards the stowed condition, as shown in Figure 2a. During flight the stay 18 is arranged in the folded condition, while during take-off and landing the stay 18 is arranged in the generally straight or aligned condition. Some main landing gear assemblies include a pair of stays coupled to a common shock absorbing strut.

The stay 18 has an elongate upper stay arm 18a having a lower end defining a pair of lugs pivotally coupled via a pivot pin 32 to a pair of lugs defined at an upper end of an elongate lower stay arm 18b. The stay arms 18a and 18b can therefore pivotally move relative to one another about the pivot pin 32. The upper end of the upper stay arm 18a defines a pair of lugs that are pivotally coupled to a lug of a connector 34 which in turn is pivotally coupled to the airframe 11. The lower end of the lower stay arm 18b defines a pair of lugs pivotally coupled to a lug of a connector 36 which in turn is pivotally coupled to the main fitting 26.

The lock stay 20 has an elongate upper link arm 20a having a lower end pivotally coupled to an upper end of an elongate lower link arm 20b via a pivot pin 38. The link arms 20a, 20b can therefore pivotally move relative to one another about the pivot pin 38. An upper end of the upper link arm 20a defines a pair of lugs that are pivotally coupled to a lug of a connector 40 which in turn is pivotally coupled to the main fitting 26. A lower end of the lower link arm 20b defines a lug that is pivotally coupled to lugs of the stay arms 18a, 18b via the pivot pin 32. Lugs of the upper stay arm 18a are disposed between the lugs of the lower stay arm 18b and the lugs of the lower link arm 20b.

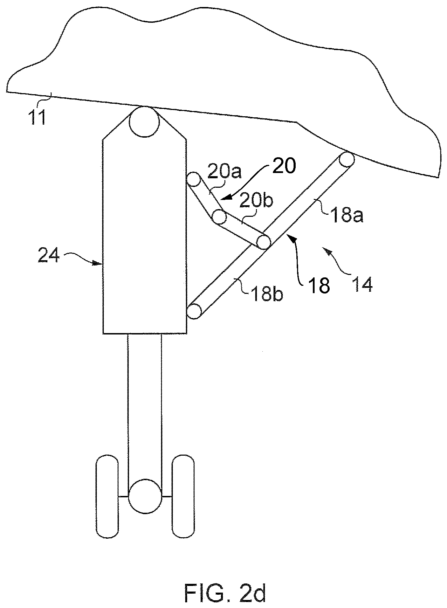

When the lock stay 20 is in the locked condition, as illustrated in Figure 2d, e, the upper and lower link arms 20a, 20b are generally longitudinally aligned or coaxial, and can be 'over-centre', such that the lock stay 20 is arranged to oppose a force attempting to fold the stay 18, so as to move the landing gear assembly from the deployed condition towards the stowed condition. The lock stay 20 must be broken to enable the stay 18 to be folded, thereby permitting the main fitting 26 to be moved by the retraction actuator towards the stowed condition.

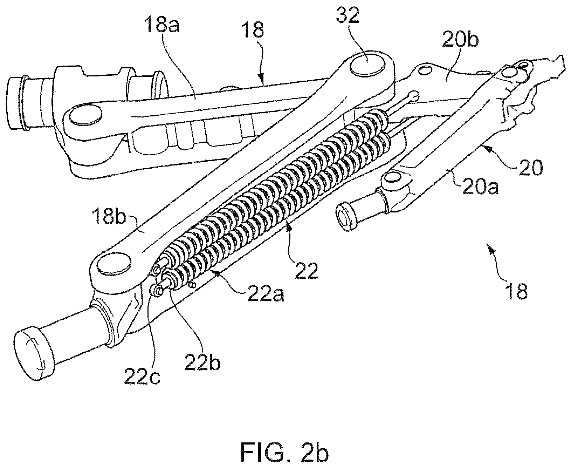

One or more down lock springs 22 are generally provided to assist in moving the landing gear assembly to the deployed condition and locking it in that state by making the lock stay. Down lock springs 22 also inhibit the lock stay accidentally being unlocked. Down lock springs 22 are generally titanium alloy coil springs, which can be coupled between the lock stay and another part of the landing gear assembly, such as an arm of the stay assembly, as shown in Figures 2b and 2e.

The spring assembly 22 is arranged to bias the lock stay 20 towards the locked condition by way of spring tension. A distal end of the spring 22a is coupled to the lower stay arm 18b via a lower engagement formation 22b which in turn is coupled to an anchor point defined by the lower connector 22c.

The coil spring of the spring assembly 22 is at its shortest when the landing gear assembly is in the deployed condition, as shown in Figure 2e, and at its longest when the landing gear assembly approaches the stowed condition, as shown in Figure 2b. As the landing gear assembly is retracted towards the stowed condition, the spring of each spring assembly extends, resulting in increased spring load and torsional stress.

Referring to Figure 2e, a lock stay actuator 42 is coupled between the upper stay arm 18a and lower link arm 20b and arranged to pivotally move the link arms 20a, b so as to 'lock' and 'unlock' the lock stay 20, as illustrated in Figure 2c. The actuator 42 can break the lock stay 20 against the down lock spring bias, allowing the landing gear assembly to be folded and stowed as described previously.

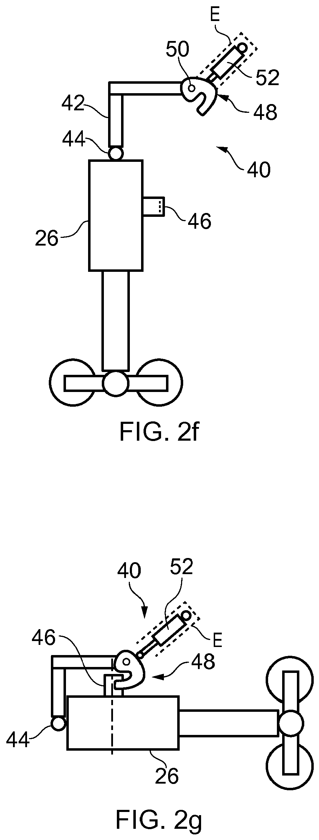

Figures 2f and 2g show the up-lock assembly 40 of the landing gear.

The main fitting 26 is pivotally coupled to the airframe 11 via a pivot pin 44 so as to be moveable by a retraction actuator (not shown) between a deployed condition, shown in Figure 2f, and a stowed condition, shown in Figure 2g.

An up-lock pin 46 is mounted on the main fitting 26 and configured to be captured by a hook 48 movably mounted to the airframe 11 via pin joint 50 so as to hold the landing gear assembly in the stowed condition.

An up-lock actuator 52 is provided to rotate the hook 48 in order to unlock the up-lock such that the landing gear can deploy. The up-lock actuator 52 can be single acting: spring biased to assume the locked condition and extensible under fluid pressure to extend or retract to unlock the up-lock hook 48. It is common for an up-lock actuator to be sized to fit within a small space E within the aircraft.

As will be appreciated from the above, various aircraft assemblies include a first part which is movable relative to a second part. When such an arrangement is present, an actuator is required in order to move the first part relative to the second part. In some cases, multiple actuators are utilised to move distinct but movably coupled parts, which can result in or a "force fight" where two actuators oppose the movement of each other, or one actuates faster than the other is capable of.

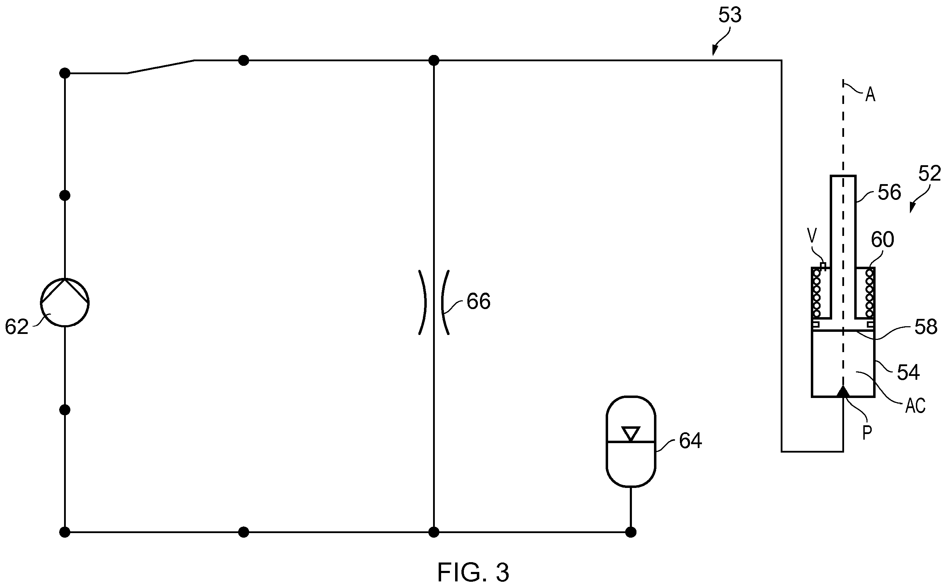

Figure 3 is a diagram of the up-lock actuator 52 of Figures 2f and 2g, illustrating a hydraulic fluid supply circuit 53 that drives the actuator 52. The hydraulic circuit 53 can be integrally formed with the actuator 52, or can be a separate unit coupled to it.

The up-lock actuator 52 comprises a cylinder 54 within which a piston and rod assembly 56, 58, is slidably housed so that the actuator 52 can extend and retract along a longitudinal axis A.

The actuator 52 is single acting in that the cylinder 54 includes a single port P for coupling the actuator 52 to a hydraulic circuit 53. The space within the cylinder 54 between the port P and piston 58 defines an active chamber AC that hydraulic fluid such as oil can be supplied to in order to cause the actuator 52 to, in this example extend. In other examples the actuator 52 can be driven to compress instead by arranging the port P on the opposite side of the rod piston 58. As will be appreciated, the rod piston 58 is provided with one or more dynamic seals (not shown) arranged to move in sliding engagement with the inner surface of the cylinder 54 to inhibit fluid flow across the rod piston 58.

The hydraulic circuit 53 comprises a piezo-electric pump 62 operable to draw hydraulic fluid from a dedicated accumulator 64 and supply it under pressure to the port P of the actuator 52. The hydraulic circuit 53 further includes a flow restrictor 66 disposed in parallel with the piezo-electric pump 62 such that, as the piezo-electric pump 62 pumps hydraulic fluid to the actuator 52, a portion of the directed fluid branches back, through the restrictor 66, to the accumulator side of the pump 62. As such, the restrictor 66 can be used to control the quantity of fluid that is pumped by the pump 62. The quantity of fluid pumped by the pump 62 can also be regulated by the operational frequency of the piezo-electric pump 62.

The actuator 52 is single acting in that there is a single port P defining a single active chamber. Hydraulic fluid entering the port P into the active chamber AC forces the piston 58 towards the side of the casing 54 from which the rod 56 extends. This causes the actuator 52 to change during a first phase between first and second extension states.

On the far side of the piston 58 within the casing there is provided resilient biasing means such as a mechanical spring 60 which is compressed in this example as the actuator 52 extends such that the spring 60 provides a resilient biasing force which urges the actuator 52 to contract to a contracted condition upon removal of fluid pressure from the pump 62. The spring 60 is situated within a vented chamber, vented to atmosphere by vent port V.

As the actuator 52 contracts, fluid is forced out of the active chamber AC through the port P and the fluid can pass back to the accumulator 64 via the restrictor 66.

The present inventors have found that a piezo-electric pump 62 can drive the up-lock actuator 52 in a single direction with sufficient force to overcome the closing bias from the spring 60 to release the up-lock, providing an assembly of reduced mass, size and/or complexity in comparison to known arrangements.

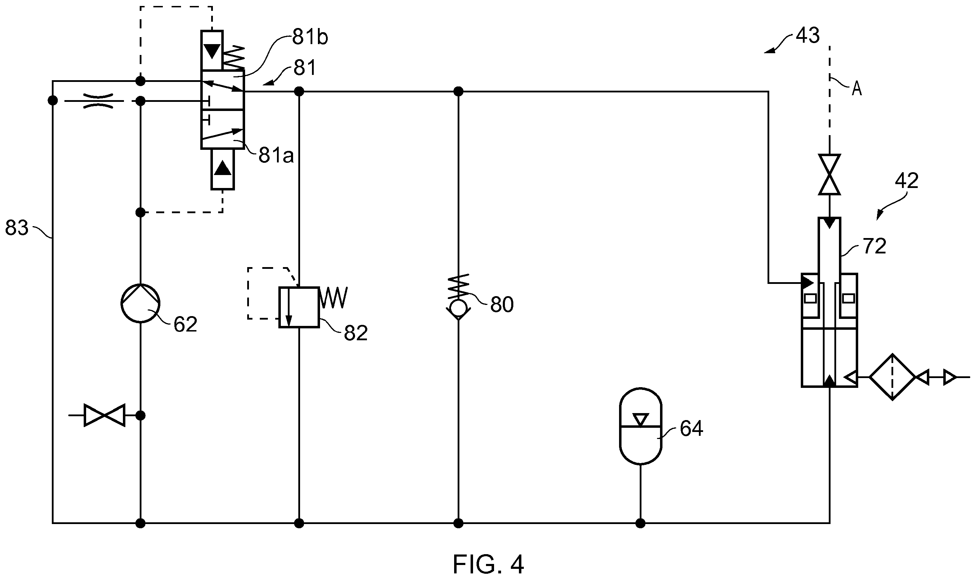

Figure 4 shows an embodiment of a down-lock or lock-stay actuator 42 of Figure 2e and an associated hydraulic fluid supply circuit 43. The hydraulic circuit 43 can be integrally formed with the actuator 42, or can be a separate unit coupled to it.

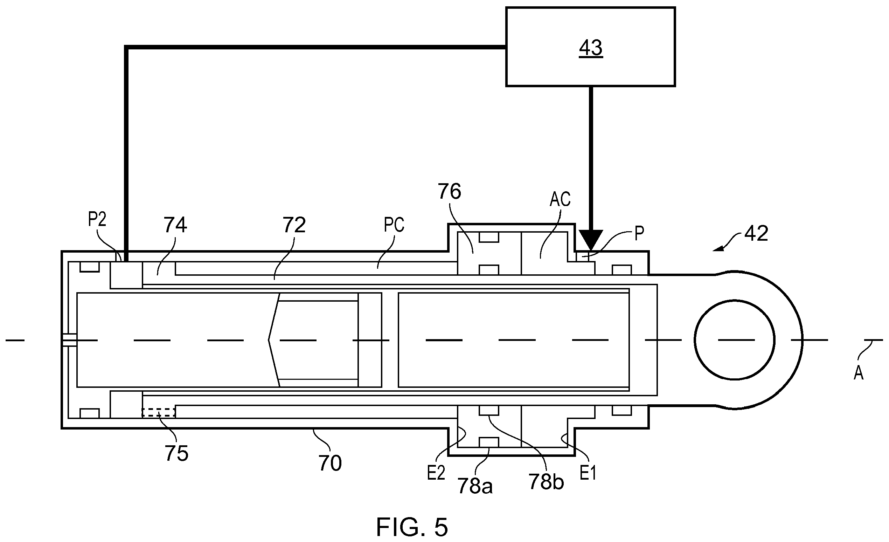

Referring additionally to Figure 5, the down-lock actuator 42 comprises a cylinder 70 within which a piston and rod assembly 72, 74, is slidably housed so that the actuator 42 can extend and retract along a longitudinal axis A.

The actuator 42 is single acting in that the cylinder 70 includes a single port P for coupling the actuator 42 to the hydraulic circuit 43. The space within the cylinder 70 between the port P and piston 74 defines an active chamber AC that hydraulic fluid such as oil can be supplied to in order to cause the actuator 42 to, in this embodiment compress. In other embodiments the actuator can be driven to extend. The space within the cylinder 70 between the port P and piston 74 also defines part of a passive chamber PC which is connected via a second port P2 to the low pressure side of the hydraulic circuit 43. Fluid within the passive chamber PC can move beyond the rod piston 74 through passages 75 for example.

A movable surface of the active chamber AC is defined by an annular piston 76 which surrounds the piston rod 72. Dynamic seals 78a, 78b on the radially inward and outward surfaces of the annular piston 76 provide sealing, sliding engagement with the piston rod 72 and casing 70 respectively. The annular piston 76 can move along the axis A between end stops E1, E2 defined in this embodiment by the casing 70. The end stop E2 is sized to inhibit movement of the annular piston 76 but not inhibit movement of the rod piston 74. Thus, with actuator 42 in a fully extend condition the annular piston 76 is against end stop E1 and the rod piston 74 against the axial face of the annular piston 76 which faces away from the active chamber AC. Fluid supplied to the active chamber AC from the circuit 43 forces the annular piston 76 away from the port, which in turn pushes the rod piston 74 away from the port P, causing the actuator 42 to move through the relatively low flow first phase.

The hydraulic circuit 43 is similar in some respects to the circuit 53 of Figure 3 and like parts have been given the same reference numerals.

The circuit 43 comprises a piezo-electric pump 62 operable to draw hydraulic fluid from a dedicated accumulator 64 and supply it under pressure to the port P of the actuator 42. It should be noted that in other embodiments the accumulator can be omitted.

A spring offset shuttle valve 81 or the like is disposed flow wise between the pump 62 and port P and has a first block 81a which places the pump 62 in fluid communication with the port P and closes a bypass branch 83 located in parallel with the pump 62 and providing fluid communication between the high and low pressure sides of the circuit 43. A second block 81b of the spring offset shuttle valve 81 isolates from pump 62 from the port P and places the port P in fluid communication with the bypass branch 83.

The spring offset shuttle valve 81 is spring biased to the second block. Operation of the pump 62 forces the first block 81a to become active, overcoming the spring bias.

The hydraulic circuit 43 further includes a one way valve 80 such as a spring biased check valve disposed in parallel with the piezo-electric pump 62. The one way valve 80 is arranged to permit fluid to flow from the low pressure side of the circuit 43 to the high pressure side, but not vice versa.

The hydraulic circuit 43 further includes a pressure relief valve 82 disposed in parallel with the piezo-electric pump 62 and arranged to open under high pressure, such as 22 MPa (3,200 psi), to permit fluid to pass from the high pressure side to the low pressure side.

Operation of the pump 62 switches the valve 81 to make block 81a active and causes fluid to be pumped to the active chamber AC. This forces the annular piston 76 into contact with the rod piston 74 to shorten the actuator 42 during a first phase between first and second extension states, breaking the lock stay 20.

Once the lock stay is broken, the retraction actuator can move the main strut to the stowed condition. In doing so, the retraction actuator biases the lock stay actuator 42 to further compress during a second phase between second and third extension states. In this embodiment, the independently movable rod piston 74 and annular piston 76 build a degree of lost motion into the actuator 42 in that the piston rod 72 can be driven into the casing 70 without affecting the volume of the active chamber AC and also reducing the quantity of fluid forced into the passive side of the hydraulic circuit in comparison to sealing rod piston arrangement.

When the landing gear is subsequently deployed, the actuator 42 is forced to extend during a third phase, which is also high flow in comparison to the first phase. The pump 62 is off during the third phase. During the initial portion of the third phase, extension of the actuator 42 is dampened by fluid flow within the passive chamber, including across the rod piston 74. During the latter portion of the third phase, the rod piston 74 forces the annular piston 76 to the end stop E1 closest to the port P, thereby forcing fluid into the hydraulic circuit 43.

The present inventors have found that a piezo-electric pump 62 can drive the lock stay actuator 42 in a single direction during the relatively short, low flow first phase with sufficient force to break the over-centre lock stay, providing an assembly of reduced mass, size and/or complexity in comparison to known arrangements. The lost motion provided by the independent movable rod piston 74 and annular actuation piston 76 enable the actuator 42 to be easily forward driven and back driven by the retraction actuator during the relative high flow second and third phases.

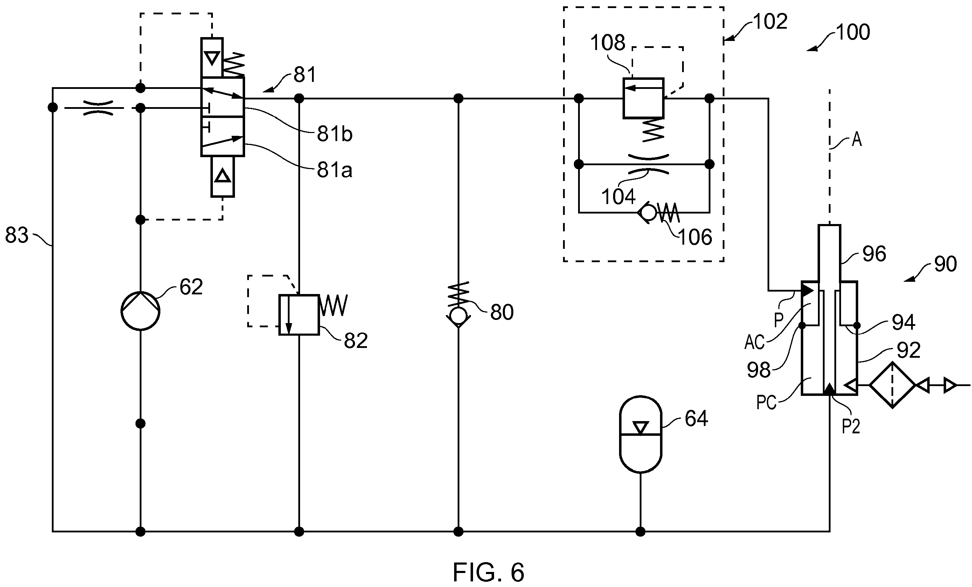

Figure 6 shows an alternative example of a down-lock actuator 90 for the assembly of Figure 2e and an associated hydraulic circuit 100.

The actuator 90 is a conventional single acting actuator comprising a cylinder 92 within which a piston and rod assembly 94, 96, is slidably housed so that the actuator 90 can extend and retract along a longitudinal axis A. The cylinder 92

includes a single port P for coupling the actuator 90 to the hydraulic circuit 100. The space within the cylinder 92 between the port P and piston 94 defines an active chamber AC that hydraulic fluid such as oil can be supplied to in order to cause the actuator 90 to, in this example compress. In other examples the actuator can be driven to extend. The piston 94 includes a dynamic seal 98 arranged to provide a sliding seal between the piston 94 and the inner wall of the cylinder 92 as the piston 94 moves. In this example the piston 94 acts as a divide between the active chamber AC and passive chamber PC and defines a surface of each chamber AC, PC.

The hydraulic circuit 100 is similar to the circuit 43 of Figure 4 and like parts have been given the same reference numerals. The hydraulic circuit 100 differs from the circuit 43 in that it includes a choke 102. The choke is provided on the high pressure side of the circuit 100 between the pump 62 and the active chamber port P.

The choke 102 comprises a flow restrictor 104 arranged to control the rate of fluid flow between the pump 62 and port P when the pump is activated and forcing the actuator 90 to compress through the first phase of movement to break the lock stay 20.

Once the lock stay 20 is broken, the retraction actuator can move the main strut to the stowed condition. In doing so, the retraction actuator biases the lock stay actuator 90 to further compress though the second phase. The internal actuator fluid flow through the second phase is greater than the flow during the first phase. The choke further comprises a second check valve 106 that opens as the actuator 90 is forced to compress to account for the increase in fluid flow. The pump 62 can be on or off during the second phase. The fluid passes from the low pressure side of the circuit 100 to the high pressure side by passing around the bypass branch 83 of the circuit if the pump 62 is off or through the check valve 80 if the pump 62 is on. As the actuator 90 is driven to compress by the retraction actuator, fluid in the passive chamber PC of the actuator 90 is forced into the hydraulic circuit 100 through the second port P2.

When the landing gear is subsequently deployed, the dock lock actuator 90 is forced to extend during a third phase, which is also high flow in comparison to the first phase. The pump 62 is off during the third phase. Fluid is forced from the active chamber AC into the circuit 100, through the flow restrictor 104 in the choke 102 to the passive chamber PC.

The actuator 90 is simpler in design than the actuator 42, but the circuit 100 is more complicated due to the choke arrangement 102.

The piezoelectric pump of embodiments of the invention can take any suitable form. In one example, a pair of one way valves facing the same way spaced from one another by a housing define a chamber between them. A surface of the chamber is formed from a movable diaphragm. A piezoelectric element is arranged to move the diaphragm to draw fluid into the chamber from the inlet valve when the diaphragm moves to increase the chamber volume and expel fluid from the chamber out of the outlet valve when the diaphragm moves to decrease the chamber volume. The pump can be driven by an oscillatory high voltage/low current supply (such as up to 2000v) with frequencies typically in the range 200 to 2000 Hz. Control can be purely supply ON/supply OFF.

Thus, embodiments of the invention provide an aircraft assembly actuator driven by a piezoelectric pump. This can provide an aircraft assembly of reduced mass, size and/or complexity in comparison to known arrangements. Actuators of embodiments of the invention can reduce the number of parts subjected to wear within the actuator and/or have higher power density in comparison to an electromechanical actuator. Moreover, the tolerance of piezo pumps to contaminated fluid enables the assembly to omit fluid filters within the actuator or hydraulic circuit. Moreover, the use of a piezo pump can lead to an actuator which is less prone to leakage.

It should be noted that the above-mentioned embodiments illustrate rather than limit the invention, and that those skilled in the art will be capable of designing many alternative embodiments without departing from the scope of the invention as defined by the appended claims**.** The word "comprising" does not exclude the presence of elements or steps other than those listed in any clause or the specification as a whole. The singular reference of an element does not exclude the plural reference of such elements and vice-versa. Parts of the invention may be implemented by means of hardware comprising several distinct elements.

## Claims

1. An aircraft landing gear assembly comprising:
a first part;
a second part (20b, 48), the second part being movably mounted with respect to the first part;
an electro-hydraulic lock stay actuator (42, 90) coupled between the second part and a first anchor point, the lock stay actuator comprising a cylinder defining a bore and a piston and rod assembly slidably mounted within the bore and an active chamber within which an increase in fluid pressure causes the lock stay actuator to change during a first phase between first and second extension states to move the second part relative to the first part,
wherein the electro-hydraulic lock stay actuator comprises or is coupled to a hydraulic fluid supply circuit (53, 43, 100) comprising a piezo-electric pump (62) operable to supply pressurised fluid to the active chamber (AC) to change the lock stay actuator between first and second extension states,
the aircraft landing gear assembly further comprising:
an accumulator for storing hydraulic fluid, the accumulator being provided in fluid communication with the piezo-electric pump;
a main strut (24) arranged to be movably coupled to an aircraft to be movable between a stowed condition for flight and a deployed condition for take-off and landing;
a multi linkage side stay (18) coupled between the main strut and a side stay anchor point and having a locking condition in which the side stay reacts attempted movement of the main strut from the deployed position and a passive condition in which the stay permits movement of the main strut to the stowed condition;
a multi linkage lock stay coupled between the side stay and a lock stay anchor point and having a locking condition in which it reacts attempted movement of the side stay from the locking condition and a passive condition in which the lock stay permits movement of the main strut to the stowed condition, wherein the second part comprises a linkage of the lock stay,
wherein the lock stay actuator is arranged during the first phase to apply an unlocking force to the lock stay to change the lock stay from the locking condition to the unlocking condition, and
wherein the assembly further comprises a retraction actuator arranged to move the main strut between the deployed and stowed conditions, wherein once the lock stay actuator has attained the second extension state, operation of the retraction actuator biases the lock stay actuator to change during a second phase to a third extension state in which the main strut is in the stowed condition,
the lock stay actuator further comprises a passive chamber (PC) on an opposite side of a rod piston of the piston and rod assembly with respect to the active chamber, the passive chamber containing hydraulic fluid in fluid communication with the accumulator (64), wherein the hydraulic circuit further comprises a pump bypass check valve (80) arranged in parallel with the pump,
**characterised in that**
the pump bypass check valve is arranged to permit flow of hydraulic fluid from the passive chamber to the active chamber but inhibit the flow of hydraulic fluid from the active chamber to the passive chamber,
the lock stay actuator comprises an actuation piston (76) which is distinct from and movable relative to the rod piston of the piston and rod assembly, the lock stay actuator being arranged such that an increase in fluid pressure in the active chamber causes the lock stay actuator to change during the first phase between the first and second extension states due to fluid acting on the actuation piston which moves into contact with the rod piston to move the rod piston (74) to cause the lock stay actuator to change between the first and second extension states,
wherein the rod piston is shaped to permit hydraulic fluid within the passive chamber to move through or beyond the rod piston.

2. An aircraft landing gear assembly according to claim 1, wherein the assembly is arranged such that the second part can be moved relative to the first part with an input of less than or equal to 500 Watts.

3. An aircraft landing gear assembly according to any preceding claim, wherein the accumulator is dedicated to the lock stay actuator.

4. An aircraft landing gear assembly according to any preceding claim, wherein the piezo-electric pump is dedicated to the lock stay actuator.

5. An aircraft landing gear assembly according to any preceding claim, wherein the lock stay actuator is a single acting actuator.

6. An aircraft landing gear assembly according to claim 1, wherein the increase in fluid pressure causes the lock stay actuator to change during the first phase between the first and second extension states due to fluid acting directly on the rod piston.

7. An aircraft landing gear assembly according to any preceding claim, wherein the lock stay actuator, the piezo-electric pump and optionally the accumulator are formed at least partially contained within a housing.

8. An aircraft including one or more aircraft landing gear assemblies according to any preceding claim.

## Patentansprüche

1. Flugzeug-Fahrgestellanordnung, die umfasst:
einen ersten Teil;
einen zweiten Teil (20b, 48), wobei der zweite Teil relativ zu dem ersten Teil bewegbar montiert ist;
einen elektrohydraulischen Verriegelungsstrebenaktuator (42, 90), der zwischen dem zweiten Teil und einem ersten Ankerpunkt gekoppelt ist, wobei der Verriegelungsstrebenaktuator einen Zylinder, der eine Bohrung definiert, und eine Kolben- und Stangen-Anordnung, die gleitbar in der Bohrung montiert ist, und eine aktive Kammer umfasst, in der ein ansteigender Fluiddruck bewirkt, dass der Verriegelungsstrebenaktuator während einer ersten Phase zwischen einem ersten und einem zweiten Ausfahrzustand wechselt, um den zweiten Teil relativ zu dem ersten Teil zu bewegen,
wobei der elektrohydraulische Verriegelungsstrebenaktuator einen Hydraulikfluid-Zuführkreis (53, 43, 100) umfasst oder mit einem solchen gekoppelt ist, der eine piezoelektrische Pumpe (62) umfasst, die zum Zuführen von druckbeaufschlagtem Fluid zu der aktiven Kammer (AC) zum Überführen des Verriegelungsstrebenaktuators zwischen einem ersten und einem zweiten Ausfahrzustand wirksam ist,
die Flugzeug-Fahrgestellanordnung weiter umfassend:
ein Akkumulator zum Speichern von Hydraulikfluid, wobei der Akkumulator in Fluidverbindung mit der piezoelektrischen Pumpe bereitgestellt ist;
ein Hauptfederbein (24), das derart angeordnet ist, dass es bewegbar mit einem Flugzeug gekoppelt ist, um zwischen einem Verstauungszustand für den Flug und einem Benutzungszustand für das Starten und Landen bewegbar zu sein;
eine Mehrfachgestänge-Seitenstrebe (18), die zwischen dem Hauptfederbein und einem Seitenstreben-Ankerpunkt gekoppelt ist und einen Verriegelungszustand, in dem die Seitenstrebe auf einen Bewegungsversuch des Hauptfederbeins aus der Benutzungsposition gegenwirkt, und einen passiven Zustand aufweist, in dem die Strebe eine Bewegung des Hauptfederbeins in den Verstauungszustand erlaubt;
eine Mehrfachgestänge-Verriegelungsstrebe, die zwischen der Seitenstrebe und einem Verriegelungsstreben-Ankerpunkt gekoppelt ist und einen Verriegelungszustand, in dem sie auf einen Bewegungsversuch der Seitenstrebe aus dem Verriegelungszustand gegenwirkt, und einen passiven Zustand aufweist, in dem die Verriegelungsstrebe eine Bewegung des Hauptfederbeins in den Verstauungszustand erlaubt, wobei der zweite Teil ein Gestänge der Verriegelungsstrebe umfasst,
wobei der Verriegelungsstrebenaktuator derart angeordnet ist, dass er während der ersten Phase eine Entriegelungskraft auf die Verriegelungsstrebe aufbringt, um die Verriegelungsstrebe aus dem Verriegelungszustand in den Entriegelungszustand zu wechseln, und
wobei die Anordnung weiter einen Einfahraktuator umfasst, der derart angeordnet ist, dass er das Hauptfederbein zwischen dem Benutzungs- und dem Verstauungszustand bewegt, wobei dann, sobald der Verriegelungsstrebenaktuator den zweiten Ausfahrzustand erreicht hat, durch die Betätigung des Einfahraktuators der Verriegelungsstrebenaktuator derart vorgespannt wird, dass er während einer zweiten Phase in einen dritten Ausfahrzustand wechselt, in dem das Hauptfederbein im Verstauungszustand ist,
wobei der Verriegelungsstrebenaktuator weiter eine passive Kammer (PC) auf einer relativ zu der aktiven Kammer einen Stangenkolben der Kolben- und Stangen-Anordnung gegenüberliegenden Seite umfasst, wobei die passive Kammer Hydraulikfluid in Fluidverbindung mit dem Akkumulator (64) enthält, wobei der Hydraulikkreis weiter ein Pumpen-Bypass-Rückschlagventil (80) umfasst, das parallel zu der Pumpe angeordnet ist,
**dadurch gekennzeichnet, dass**
das Pumpen-Bypass-Rückschlagventil derart angeordnet ist, dass es ein Strömen von Hydraulikfluid aus der passiven Kammer zu der aktiven Kammer erlaubt, aber das Strömen von Hydraulikfluid aus der aktiven Kammer zu der passiven Kammer verhindert, wobei der Verriegelungsstrebenaktuator einen Aktuatorkolben (76) umfasst, der sich von dem Stangenkolben der Kolben- und Stangen-Anordnung unterscheidet und relativ dazu beweglich ist, wobei der Verriegelungsstrebenaktuator derart angeordnet ist, dass ein erhöhter Fluiddruck in der aktiven Kammer bewirkt, dass der Verriegelungsstrebenaktuator während der ersten Phase zwischen dem ersten und dem zweiten Ausfahrzustand übergeht aufgrund des Fluids, das auf den Aktuatorkolben wirkt, der sich in Kontakt mit dem Stangenkolben bewegt, um den Stangenkolben (74) derart zu bewegen, dass er bewirkt, dass der Verriegelungsstrebenaktuator zwischen dem ersten und dem zweiten Ausfahrzustand wechselt,
wobei der Stangenkolben derart ausgestaltet ist, dass er erlaubt, dass Hydraulikfluid in der passiven Kammer durch den Stangenkolben hindurch oder über diesen hinaus strömt.

2. Flugzeug-Fahrgestellanordnung nach Anspruch 1, bei der die Anordnung derart angeordnet ist, dass der zweite Teil mit einer Eingangsleistung von weniger als oder gleich 500 Watt relativ zu dem ersten Teil bewegt werden kann.

3. Flugzeug-Fahrgestellanordnung nach einem vorhergehenden Anspruch, bei der der Akkumulator dem Verriegelungsstrebenaktuator zugeordnet ist.

4. Flugzeug-Fahrgestellanordnung nach einem vorhergehenden Anspruch, bei der die piezoelektrische Pumpe dem Verriegelungsstrebenaktuator zugeordnet ist.

5. Flugzeug-Fahrgestellanordnung nach einem vorhergehenden Anspruch, bei der der Verriegelungsstrebenaktuator ein einfachwirkender Aktuator ist.

6. Flugzeug-Fahrgestellanordnung nach Anspruch 1, bei der der erhöhte Fluiddruck bewirkt, dass der Verriegelungsstrebenaktuator während der ersten Phase aufgrund des Fluids, das direkt auf den Stangenkolben wirkt, zwischen dem ersten und dem zweiten Ausfahrzustand wechselt.

7. Flugzeug-Fahrgestellanordnung nach einem vorhergehenden Anspruch, wobei der Verriegelungsstrebenaktuator, die piezoelektrische Pumpe und optional der Akkumulator zumindest teilweise in einem Gehäuse enthalten ausgebildet sind.

8. Flugzeug, das eine oder mehrere Flugzeug-Fahrgestellanordnungen nach einem der vorhergehenden Ansprüche einschließt.

## Revendications

1. Ensemble de train d'atterrissage d'aéronef comprenant :
une première partie ;
une deuxième partie (20b, 48), la deuxième partie étant montée de manière mobile par rapport à la première partie ;
un actionneur électrohydraulique de contrefiche de verrouillage (42, 90) couplé entre la deuxième partie et un premier point d'ancrage, l'actionneur de contrefiche de verrouillage comprenant un vérin définissant un alésage et un ensemble piston et tige monté coulissant à l'intérieur de l'alésage et une chambre active à l'intérieur de laquelle une augmentation de pression de fluide provoque le changement de l'actionneur de contrefiche de verrouillage, durant une première phase, entre des premier et deuxième états d'extension pour déplacer la deuxième partie par rapport à la première partie,
dans lequel l'actionneur électrohydraulique de contrefiche de verrouillage comprend ou est couplé à un circuit d'alimentation en fluide hydraulique (53, 43, 100) comprenant une pompe piézoélectrique (62) pouvant fonctionner pour alimenter la chambre active (AC) en fluide sous pression afin de faire changer l'actionneur de contrefiche de verrouillage entre des premier et deuxième états d'extension,
l'ensemble de train d'atterrissage d'aéronef comprenant en outre :
un accumulateur pour stocker du fluide hydraulique, l'accumulateur étant prévu en communication fluidique avec la pompe piézoélectrique ;
une jambe principale (24) agencée pour être couplée de manière mobile à un aéronef afin d'être mobile entre une condition escamotée pour le vol et une condition déployée pour le décollage et l'atterrissage ;
une contrefiche latérale à tringleries multiples (18) couplée entre la jambe principale et un point d'ancrage de contrefiche latérale et présentant une condition de verrouillage dans laquelle la contrefiche latérale réagit à une tentative de déplacement de la jambe principale à partir de la position déployée et une condition passive dans laquelle la contrefiche permet le déplacement de la jambe principale vers la condition escamotée ;
une contrefiche de verrouillage à tringleries multiples couplée entre la contrefiche latérale et un point d'ancrage de contrefiche de verrouillage et présentant une condition de verrouillage dans laquelle elle réagit à une tentative de déplacement de la contrefiche latérale à partir de la condition de verrouillage et une condition passive dans laquelle la contrefiche de verrouillage permet le déplacement de la jambe principale vers la condition rangée, dans lequel la deuxième partie comprend une tringlerie de la contrefiche de verrouillage,
dans lequel l'actionneur de contrefiche de verrouillage est agencé durant la première phase pour appliquer une force de déverrouillage à la contrefiche de verrouillage pour faire passer la contrefiche de verrouillage de la condition de verrouillage à la condition de déverrouillage, et
dans lequel l'ensemble comprend en outre un actionneur de rétraction agencé pour déplacer la jambe principale entre les conditions déployée et escamotée, dans lequel une fois que l'actionneur de contrefiche de verrouillage a atteint le deuxième état d'extension, l'actionnement de l'actionneur de rétraction sollicite l'actionneur de contrefiche de verrouillage pour changer, durant une deuxième phase, vers un troisième état d'extension dans lequel la jambe principale est dans la condition escamotée,
l'actionneur de contrefiche de verrouillage comprend en outre une chambre passive (PC) sur un côté opposé, d'un piston de tige de l'ensemble piston et tige par rapport à la chambre active, la chambre passive contenant du fluide hydraulique en communication fluidique avec l'accumulateur (64), dans lequel le circuit hydraulique comprend en outre un clapet de retenue de dérivation de pompe (80) agencé en parallèle avec la pompe,
**caractérisé en ce que**
le clapet de retenue de dérivation de pompe est agencé pour permettre un écoulement de fluide hydraulique depuis la chambre passive vers la chambre active mais inhiber l'écoulement de fluide hydraulique depuis la chambre active vers la chambre passive, l'actionneur de contrefiche de verrouillage comprend un piston d'actionnement (76) qui est distinct du piston de tige de l'ensemble piston et tige et mobile par rapport au piston de tige de l'ensemble piston et tige, l'actionneur de contrefiche de verrouillage étant agencé de telle sorte qu'une augmentation de pression de fluide dans la chambre active provoque le changement de l'actionneur de contrefiche de verrouillage, durant la première phase, entre les premier et deuxième états d'extension en raison du fluide agissant sur le piston d'actionnement qui se déplace jusqu'à entrer en contact avec le piston de tige pour déplacer le piston de tige (74) afin de provoquer le changement de l'actionneur de contrefiche de verrouillage entre les premier et deuxième états d'extension,
dans lequel le piston de tige est façonné pour permettre au fluide hydraulique à l'intérieur de la chambre passive de se déplacer à travers ou au-delà du piston de tige.

2. Ensemble de train d'atterrissage d'aéronef selon la revendication 1, dans lequel l'ensemble est agencé de telle sorte que la deuxième partie peut être déplacée par rapport à la première partie avec une entrée inférieure ou égale à 500 watts.

3. Ensemble de train d'atterrissage d'aéronef selon l'une quelconque des revendications précédentes, dans lequel l'accumulateur est dédié à l'actionneur de contrefiche de verrouillage.

4. Ensemble de train d'atterrissage d'aéronef selon l'une quelconque des revendications précédentes, dans lequel la pompe piézoélectrique est dédiée à l'actionneur de contrefiche de verrouillage.

5. Ensemble de train d'atterrissage d'aéronef selon l'une quelconque des revendications précédentes, dans lequel l'actionneur de contrefiche de verrouillage est un actionneur à action unique.

6. Ensemble de train d'atterrissage d'aéronef selon la revendication 1, dans lequel l'augmentation de pression de fluide provoque le changement de l'actionneur de contrefiche de verrouillage, durant la première phase, entre les premier et deuxième états d'extension en raison du fluide agissant directement sur le piston de tige.

7. Ensemble de train d'atterrissage d'aéronef selon l'une quelconque des revendications précédentes, dans lequel l'actionneur de contrefiche de verrouillage, la pompe piézoélectrique et facultativement l'accumulateur sont formés, au moins partiellement, à l'intérieur d'un logement.

8. Aéronef incluant un ou plusieurs ensembles de train d'atterrissage d'aéronef selon l'une quelconque des revendications précédentes.
